# EUROPÄISCHE PATENTSCHRIFT

(11) **EP 0 585 612 B1**
(45) Veröffentlichungstag und Bekanntmachung des Hinweises auf die Patenterteilung: **27.09.1995**
(21) Anmeldenummer: 93112174.3
(22) Anmeldetag: 29.07.1993
(51) Int. Cl.: B60R 21/26, F42B 5/16, F42B 39/20, B60R 22/46

(54) **Antriebsvorrichtung mit einem zu bewegenden Antriebsteil und einem pyrotechnischen Gasgenerator**
Driving mechanism with a movable driving part and a pyrotechnic gas generator
Dispositif de propulsion avec une partie motrice mobile et un générateur de gaz pyrotechnique

(30) Priorität: 28.08.1992 DE 4228696
(43) Veröffentlichungstag der Anmeldung: 09.03.1994
(60) Teilanmeldung: 95103897.5
(73) Patentinhaber: HS Technik und Design Technische Entwicklungen GmbH, 82234 Wessling (DE)
(72) Erfinder: Specht, Martin, D-82340 Feldafing (DE); Krauss, Walter, D-80689 München (DE)
(74) Vertreter: Nöth, Heinz, Dipl.-Phys.

(56) Entgegenhaltungen:
- WO-A-90/05651
- CH-A- 318 827
- DE-A- 2 059 571
- DE-A- 2 150 744
- DE-A- 3 220 498
- DE-C- 49 196
- DE-C- 3 933 555
- US-A- 3 648 616
- US-A- 4 004 516
- US-A- 4 411 199
- US-A- 4 927 175

## Beschreibung

Die Erfindung betrifft eine Antriebsvorrichtung mit einem zu bewegenden Antriebsteil und einem pyrotechnischen Gasgenerator nach dem Oberbegriff des Patentanspruchs 1.

Bei bekannten Antriebsvorrichtung mit pyrotechnischen Gasgeneratoren, beispielsweise als Antrieb von Gurtstrammern, besteht die Gefahr, daß beim Zünden des Treibmittels innerhalb eines sehr kurzen Zeitraums ein hoher Druck durch das erzeugte Antriebsgas erzeugt wird, der auf die zu bewegenden Teile der Antriebsvorrichtung zur Einwirkung kommt. Dies kann zur Zerstörung der zu bewegenden Antriebsteile führen.

Aus der DE-A-3 220 498 ist ein Gurtstrammer mit einem pyrotechnischen Treibsatz bekannt. Der Treibsatz ist in einem als Rohr ausgebildeten Gehäuse enthalten und besteht aus zwei hintereinanderliegenden Treibsatzabschnitten, die durch jeweilige elektrische Zünder unabhängig voneinander zündbar sind. Das von den Treibsatzabschnitten erzeugte Antriebsgas wirkt auf die Stirnfläche eines zum Rohr benachbarten Antriebskolbens. Beim Aktivieren des Gurtstrammers wird zuerst der obere Treibsatzabschnitt gezündet, der einen geringeren Energiegehalt im Vergleich zum zweiten Treibsatzabschnitt aufweist. Daher wird die Anfangsbelastung des Antriebskolbens und weiterer Bewegungsübertragungsteile in annehmbaren Grenzen gehalten. Anschließend erfolgt die Zündung des zweiten Treibsatzabschnittes, wodurch eine kontinuierliche Bewegung des Kolbens erzielt wird. Nachteilig ist jedoch, daß jeweils eine elektrische Zündeinrichtung für jeden der Treibsatzabschnitte benötigt wird und die zeitliche Abfolge der Zündungen exakt gesteuert werden muß, um das erwünschte Verhalten des Treibsatzes zu erzielen.

Aus der DE-A-2 150 744 ist ein Stoßdämpfungssystem in der Art eines Airbags bekannt, bei dem im Unglücksfall eine elektrische Zündpille eine separate Verstärkerladung zündet, deren Antriebsgas eine aufblasbare Hülle zum Schutz eines Fahrzeuginsassen anfänglich füllt, bis durch das Antriebsgas der Verstärkerladung eine Hauptladung gezündet wird, die die Hülle vollständig füllt.

Aus der DE-C-3 933 555 ist eine Treibladung für einen Airbag-Gasgenerator bekannt, die aus verschiedenen, fest aufeinander haftenden Granulatschichten besteht und als tablettenförmiger Körper geformt ist, wobei die Verbrennung von außen nach innen mit wachsender Geschwindigkeit erfolgt.

Die US-3 648 616 beschreibt eine Geschoßhülle für ein Gewehr oder eine ähnliche Einrichtung mit einer Zündeinrichtung und einer zweistufigen Explosivladung. Hier wird das Antriebsgas durch die beiden Explosivladungen erzeugt, nicht jedoch durch die Zündeinrichtung selbst.

Der Erfindung liegt daher die Aufgabe zugrunde, eine Antriebsvorrichtung mit einem zu bewegenden Antriebsteil und einem pyrotechnischen Gasgenerator der eingangs genannten Art zu vereinfachen, wobei eine schonende Einwirkung des Antriebsgases auf die bewegten Antriebsteile der Antriebsvorrichtung beibehalten werden soll.

Diese Aufgabe wird bei der Antriebsvorrichtung der eingangs genannten Art erfindungsgemäß durch gelöst, daß das Antriebsgas der ersten Stufe hauptsächlich durch einen oder mehrere Explosivstoffe der Zündeinrichtung gebildet wird.

Hierdurch wird eine Vereinfachung der Zündsteuerung erreicht, da gegenüber dem Stand der Technik gemäß der DE-A-3 220 498 lediglich eine Zündeinrichtung erforderlich ist und die zeitliche Abfolge der Zündung der beiden Stufen durch den Aufbau des Gasgenerators ohne zusätzliche Steuerung festlegbar ist. Außerdem ist eine schnellstmögliche anfängliche Gaserzeugung durch Verwendung des Explosivstoffes der Zündeinrichtung selbst möglich.

Wenn das Gas in zwei oder mehr Stufen aus dem Gehäuse austreten soll, wobei sich die aufeinanderfolgenden Stufen in der Antriebswirkung des Gases auf das Teil bzw. die zu bewegenden Teile voneinander unterscheiden und in der ersten Stufe die geringste Antriebswirkung ausgeübt wird, so kann dies gemäß einer vorteilhaften Weiterbildung dadurch erreicht werden, daß das in der ersten Stufe aus dem Gehäuse des Gasgenerators austretende Gas gegenüber den nachfolgenden Stufen eine verringerte Austrittsgeschwindigkeit hat. Dies läßt sich beispielsweise dadurch erreichen, daß während der ersten Stufe ein Explosivstoff zur Wirkung kommt, der gegenüber den in den anderen Stufen zur Wirkung kommenden Explosivstoffen eine geringere Explosionsgeschwindigkeit hat. Hierzu können zwei oder mehr Treibmittel bzw. Explosivstoffe mit unterschiedlichen Explosionsgeschwindigkeiten vorgesehen sein, die in Ausströmrichtung der Antriebsgase nacheinander angeordnet sind.

Hierdurch erreicht man einen allmählich ansteigenden Druck, der auf das zu bewegende Teil bzw. die zu bewegenden Teile ausgeübt wird. Auf die ruhende Masse des beweglichen Teils bzw. der beweglichen Teile wird eine anschiebende Wirkung in der ersten Stufe der Antriebswirkung erreicht. In der nachfolgenden Stufe bzw. nachfolgenden Stufen erhöht sich die Antriebswirkung, beispielsweise in Form erhöhter Explosionsgeschwindigkeiten, so daß innerhalb einer zur Verfügung stehenden Zeit, beispielsweise in der Größenordnung von 10 ms, zu bewegende Teile innerhalb einer bestimmten Strecke bewegt werden können bzw. ein vorgegebenes Volumen mit dem austretenden Gas befüllt wird. Man erreicht dabei innerhalb der kurzen zur Verfügung stehenden Zeit eine schonende Einwirkung auf die Teile. Hierbei kann es sich beispielsweise um einen in einem Führungsrohr anzutreibenden Kolben handeln. Dieser Kolben kann beispielsweise als Zugmittel Verwendung finden. Derartige als Zugmittel wirkende Kolben kommen beispielsweise bei Gurtstraffern für Sicherheitsgurte in Kraftfahrzeugen zur Anwendung. Ferner kann der pyrotechnische Gasgenerator zum Befüllen von vorgegebenen Volumina, beispielsweise von aufblasbaren Airbags in Kraftfahrzeugen, dienen.

Die zum Einsatz kommenden Treibmittel können im Kartuschengehäuse des Gasgenerators durch eine Trennwand voneinander getrennt sein, so daß eine Durchmischung dieser insbesondere im pulverförmigen Zustand vorliegenden Treibmittel verhindert wird. Bei ausgelöster Zündeinrichtung wird zunächst das erste Treibmittel, welches eine geringere Explosionsgeschwindigkeit, d.h. welches im Druckraum pro Zeiteinheit einen geringeren Druckanstieg erzeugt, gezündet wird. Durch das dabei entstehende Antriebsgas wird die Trennwand zerstört und das zweite Treibmittel mit der höheren Explosionsgeschwindigkeit gezündet. Bei mehr als zwei Treibmitteln setzt sich dieser Vorgang fort. Die Trennwand bzw. die Trennwände kann bzw. können aus einem folienartigen Material, z.B. Kunststoff, Pappe oder dergl. bestehen. Im nicht gezündeten Zustand wird eine sichere Trennung der Treibmittel, welche in Pulverform vorliegen können, gewährleistet. Es wird auch über einen langen Zeitraum eine sichere Trennung der beiden Treibmittel beibehalten.

Das zweite bzw. letzte Treibmittel mit der höheren bzw. höchsten Explosionsgeschwindigkeit ist zwischen der einen Trennwand bzw. letzten Trennwand und der im ungezündeten Zustand durch eine Abtrennung verschlossenen Öffnung des Kartuschengehäuses angeordnet. Durch diese Öffnung tritt das Antriebsgas bzw. treten die Antriebsgase aus dem Gasgenerator und wirken auf die zu bewegenden Teile.

Treibmittel, wie beispielsweise Nitrocellulose, ändern im Laufe der Zeit ihr Explosionsverhalten zu höheren Explosionsgeschwindigkeiten, so daß auf die zu bewegenden Teile nach längerer Zeit Verweildauer eine zu hohe mechanische Belastung ausgeübt wird. Durch die Erfindung wird dem dadurch Rechnung getragen, daß in der ersten Stufe ein Treibmittel zum Einsatz kommt, welches auch nach längerer Lagerzeit einen Druckgradienten hat, der eine schonende Einwirkung auf die zu bewegenden Teile ausübt.

Beispielsweise auch durch entsprechende Bemessung der Ladedichte und Mengen der Treibmittel lassen sich mittlere bzw. durchschnittliche Druckgradienten der Antriebsgase bzw. der Antriebsgasmischungen für die einzelnen Stufen von ca. 40 bis 70 bar/ms in Zeiträumen für die jeweiligen Stufen von 2,0 bis 4,0 ms einstellen.

Als erstes Treibmittel eignet sich z.B. Schwarzpulver und als zweites Treibmittel Nitrocellulose (Cellulosenitrat mit N 12,3 - 13,7 %).

Die Austrittsöffnung für das Antriebsgas aus dem Kartuschengehäuse kann etwa dem sich quer zur Ausbreitungsrichtung des Antriebsgases erstreckenden Behälterquerschnitt entsprechen, wobei die Öffnung auch geringfügig kleiner sein kann, um eine sichere Halterung der Abdeckung der Öffnung während des nicht gezündeten Zustandes zu erreichen.

Anhand der Figuren wird die Erfindung noch näher erläutert. Es zeigt:
- Fig. 1: ein Ausführungsbeispiel für einen Gasgenerator der erfindungsgemäßen Antriebsvorrichtung; und
- Fig. 2: den zeitlichen Verlauf des Druckanstiegs für ein Antriebsgas bei einem Ausführungsbeispiel der Fig. 1.

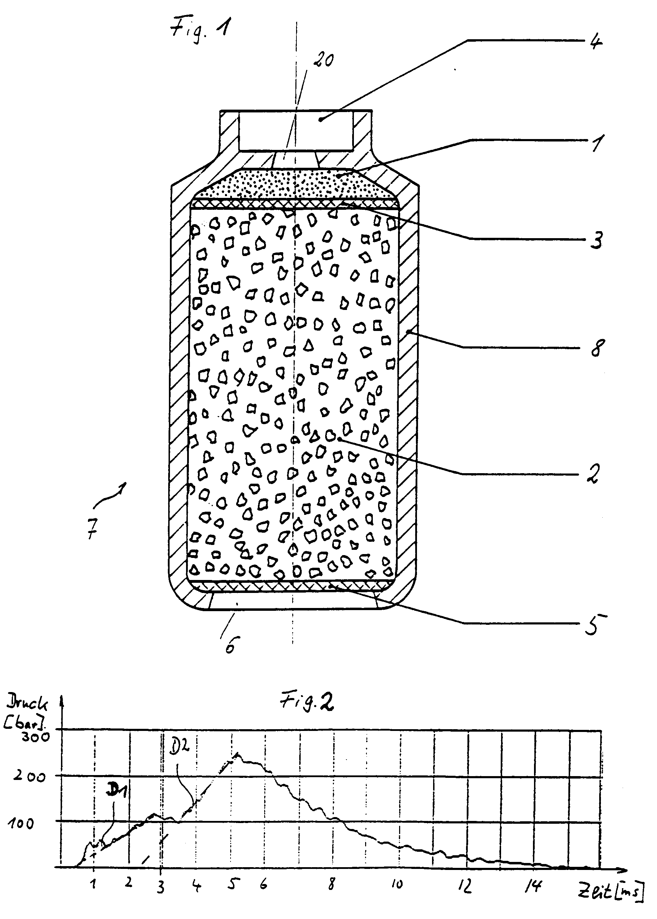

Der Aufbau eines Ausführungsbeispiels eines Gasgenerators 7 der erfindungsgemäßen Antriebsvorrichtung ist im einzelnen in der Figur 1 gezeigt. Dieser Gasgenerator besitzt ein Kartuschengehäuse 8, in welchem zwei Treibmittel 1 und 2 in Pulverform angeordnet sind. Die beiden Treibmittel 1 und 2 werden im Ruhezustand voneinander getrennt und können sich nicht vermischen. Dies wird erreicht durch eine Trennwand 3, die zwischen den beiden pulverförmigen Treibmitteln 1 und 2 angeordnet ist. Diese Trennwand kann aus Pappe oder einem anderen geeigneten Stoff bestehen.

Das eine axiale Ende des Kartuschengehäuses 8 ist an der Seite einer Zündeinrichtung 4 abgeschlossen. Zwischen der Zündeinrichtung 4 und dem ersten Treibmittel 1 befindet sich ein Zündkanal 20, durch welchen der in der Zündeinrichtung 4 vorhandene Zündsprengstoff zur Zündung des Treibmittels 1 wirkt. Die Zündeinrichtung 4 kann elektrisch oder mechanisch, z.B. mittels eines Schlagbolzens, gezündet werden.

Zwischen der Trennwand 3 und einer Abdeckung 5, welche zur Abdeckung einer Öffnung 6 im Kartuschengehäuse 8 dient, befindet sich das zweite Treibmittel 2. Die Öffnung 6 liegt an dem der Zündeinrichtung 4 entgegengesetzten axialen Ende des Kartuschengehäuses 8. Der Öffnungsquerschnitt der Öffnung 6 ist beim dargestellten Ausführungsbeispiel geringfügig kleiner als der Querschnitt des Kartuschengehäuses 8. Lediglich zum Festhalten der Abdeckung 5 ist der Umfangsrand der Öffnung 6 geringfügig einwärts gebogen.

Das Treibmittel 1 ist hinsichtlich seiner Ladungsdichte und seiner Auswahl im Raum zwischen der Trennwand 3 und dem Zündkanal 20 so bemessen und gewählt, daß es einen relativ flachen Anstieg des an der Öffnung 6 wirksam werdenden Druckes, der beispielsweise auf einen anzutreibenden Kolben wirkt, gewährleistet, wie das aus Figur 2 zu erkennen ist. Bei dem dargestellten Ausführungsbeispiel ergibt sich ein Druckanstieg auf ca. 120 bar innerhalb eines Zeitraums von etwa 2,5 Millisekunden (ms) nach dem Zündzeitpunkt. Der durchschnittliche Druckgradient D1 ist in der Figur 2 strichliert eingezeichnet. Dieser verhältnismäßig langsame Druckanstieg, welcher vom ersten Treibmittel 1 erzeugt wird, wirkt sich nicht wie bei den bekannten Antriebseinrichtungen explosionsartig auf das oder die zu bewegenden Teile, beispielsweise einen Kolben, aus, sondern hat eine anschiebende Wirkung. Durch das vom Treibmittel 1 erzeugte Antriebsgas wird die Trennwand 3 zerstört und das zweite Treibmittel 2 gezündet. Dieses zweite Treibmittel 2 besitzt eine höhere Explosionsgeschwindigkeit als das erste Treibmittel 1 und kann auch einen höheren Spitzenwert des Antriebsdruckes erzeugen als das Treibmittel 1. Wie aus der Figur 2 zu erkennen ist, verläuft der durchschnittliche strichliert eingezeichnete Druckanstiegsgradient D2 des zweiten Treibmittels 2 etwas steiler als der des ersten Treibmittels 1. Hierdurch wird gewährleistet, daß nach der Anschiebphase in der ersten Stufe innerhalb relativ kurzer Zeit, z.B. etwa 2 ms, der volle Druck des Antriebsgases, welcher beim dargestellten Ausführungsbeispiel etwa 250 bar beträgt, nach Zerstörung der Abdeckung 5 innerhalb von etwa weiteren 2 bis 3 ms aufgebaut wird. Dabei werden die zu bewegenden Teile, z.B. ein in ein Führungsrohr zu bewegender Kolben, in Endposition gebracht.

Aufgrund der relativ großen Öffnung 6 entweicht das Antriebsgas aus dem Kartuschengehäuse 8 nicht mit Düsenwirkung, sondern wird wie bei einer Platzpatrone in den angeschlossenen Gasraum freigesetzt. Dabei übt das Antriebsgas, wie schon erläutert, zunächst eine anschiebende Wirkung aus. Die Bewegung der Teile wird dann durch den weiteren durch das zweite Treibmittel bewirkten Druckanstieg beschleunigt und innerhalb der vorgesehenen Zeit, z.B. 4 bis 5 ms, in die Endstellung gebracht.

Bei dem in einem Führungsrohr anzutreibenden Kolben kann es sich um die Antriebseinrichtung eines Gurtstraffers handeln. Hierzu ist der Kolben mit einem Zugmittel, beispielsweise einem Zugseil mit dem zu straffenden Sicherheitsgurtband verbunden.

Der Druckraum, in welchem das Antriebsgas freigesetzt wird, kann jedoch auch mit dem zu befüllenden Volumen eines Airbags verbunden sein. Hierbei wird erreicht, daß der Airbag nicht explosionsartig befüllt wird, sondern eine schonende Befüllung innerhalb der zulässigen Zeit erreicht wird.

## Patentansprüche

1. Antriebsvorrichtung mit einem zu bewegenden Antriebsteil und einem pyrotechnischen Gasgenerator, der ein Gehäuse, eine Zündeinrichtung und einen im Gehäuse angeordneten Treibmittelsatz enthält, welcher bei Zündung durch die Zündeinrichtung ein Antriebsgas entwickelt, das beim Austritt aus dem Gehäuse als Antriebsmittel für das zu bewegende Antriebsteil dient, wobei das Gas in mindestens zwei Stufen aus dem Gehäuse austritt und das während der ersten Stufe austretende Gas eine gegenüber dem Gas der nachfolgenden zweiten Stufe bzw. nachfolgenden Stufen verringerte Antriebswirkung auf das zu bewegende Antriebsteil ausübt,
dadurch **gekennzeichnet,**
daß das Gas der ersten Stufe hauptsächlich durch einen oder mehrere Explosivstoffe der Zündeinrichtung (4) gebildet ist.

2. Antriebsvorrichtung nach Anspruch 1, dadurch gekennzeichnet, daß das Gas der ersten Stufe mit gegenüber der zweiten bzw. den nachfolgenden Stufen verringerter Austrittsgeschwindigkeit aus dem Gehäuse (8) austritt.

3. Antriebsvorrichtung nach Anspruch 1 oder 2, dadurch gekennzeichnet, daß die Gase der unterschiedlichen Stufen durch Explosionsstoffe mit unterschiedlichen Explosionsgeschwindigkeiten gebildet sind, wobei das Gas der ersten Stufe durch einen Explosivstoff mit der geringsten Explosionsgeschwindigkeit gebildet ist.

4. Antriebsvorrichtung nach einem der Ansprüche 1 bis 3, dadurch gekennzeichnet, daß im Gehäuse zwei oder mehr Treibmittel mit unterschiedlichen Explosionsgeschwindigkeiten angeordnet sind, wobei in Ausströmrichtung des Gases das der Zündeinrichtung (4) am nächsten im Gehäuse (8) angeordnete Treibmittel (1) die niedrigste Explosionsgeschwindigkeit aufweist.

5. Antriebsvorrichtung nach Anspruch 4, dadurch gekennzeichnet, daß die Treibmittel (1, 2) durch quer zur Ausbreitungsrichtung des Antriebsgases sich erstreckende Trennwände (3) getrennt sind, wobei die Trennwände (3) durch die Antriebsgase zerstörbar sind.

6. Antriebsvorrichtung nach einem der Ansprüche 1 bis 5, dadurch gekennzeichnet,
- daß im Gehäuse (8) zwei Treibmittel (1,2) mit unterschiedlichen Explosionsgeschwindigkeiten angeordnet sind;
- daß die beiden Treibmittel (1,2) quer zur Ausbreitungsrichtung des Antriebsgases mit einer Trennwand (3) voneinander getrennt sind,
- daß das erste Treibmittel (1) mit einer geringeren Explosionsgeschwindigkeit zwischen der Zündeinrichtung (4) und dem zweiten Treibmittel (2) mit der höheren Explosionsgeschwindigkeit angeordnet ist, und
- daß das zweite Treibmittel (2) zwischen der Trennwand (3) und der im nicht gezündeten Zustand mit einer Abdeckung (5) verschlossenen Öffnung (6), durch welche das Antriebsgas austritt, angeordnet ist.

7. Antriebsvorrichtung nach einem der Ansprüche 1 bis 6, dadurch gekennzeichnet, daß das erste Treibmittel (1) Schwarzpulver und das zweite Treibmittel (2) Nitrocellulose (z.B. Cellulosenitrat mit N 12,3-13,7 %) ist.

8. Antriebsvorrichtung nach einem der Ansprüche 1 bis 7, dadurch gekennzeichnet, daß die Öffnung (6), durch welche das Antriebsgas aus dem Gasgenerator (7) entweicht, etwa dem quer zur Ausbreitungsrichtung des Treibmittelgases sich erstreckenden Behälterquerschnitt des Kartuschengehäuses (8) entspricht oder geringfügig kleiner ist.

9. Antriebsvorrichtung nach einem der Ansprüche 1 bis 8, dadurch gekennzeichnet, daß an das Gehäuse ein expandierbarer Raum angeschlossen ist, in welchen das Antriebsgas strömt.

10. Antriebsvorrichtung nach Anspruch 9, dadurch gekennzeichnet, daß sich der expandierbare Raum in einem Rohr befindet und durch einen Kolben begrenzt ist, der durch das Antriebsgas im Rohr bewegbar bzw. antreibbar ist.

11. Antriebsvorrichtung nach Anspruch 9, dadurch gekennzeichnet, daß der expandierbare Raum von einer durch das Antriebsgas aufblasbaren Hülle gebildet ist.

12. Antriebsvorrichtung nach einem der Ansprüche 1 bis 11, dadurch gekennzeichnet, daß innerhalb einer jeweiligen Stufe ein Druckgradient von 40 bis 70 bar/ms innerhalb eines jeweiligen Zeitraums von 2,0 bis 4,0 ms gebildet wird.

## Claims

1. A drive device having a drive member to be moved and a pyrotechnic gas generator which includes a casing, a firing device and a propellant which is arranged in the casing and which upon firing by the firing device develops a drive gas which on issuing from the casing serves as a drive means for the drive member to be moved, wherein the gas issues from the casing in at least two stages and the gas which issues during the first stage exerts on the drive member to be moved a drive action which is reduced in comparison with the gas of the subsequent second stage or subsequent stages, characterised in that the gas of the first stage is formed principally by one or more explosive substances of the firing device (4).

2. A drive device according to claim 1 characterised in that the gas of the first stage issues from the casing (8) at an issue speed which is reduced relative to the second or the subsequent stages.

3. A drive device according to claim 1 or claim 2 characterised in that the gases of the different stages are formed by explosive substances with different rates of explosion, wherein the gas of the first stage is formed by an explosive substance with the lowest rate of explosion.

4. A drive device according to one of claims 1 to 3 characterised in that two or more propellants with different rates of explosion are arranged in the casing, wherein in the direction of discharge flow of the gas the propellant (1) which is arranged closest in the casing (8) to the firing device (4) has the lowest rate of explosion.

5. A drive device according to claim 4 characterised in that the propellants (1, 2) are separated by partitions (3) which extend transversely to the direction of propagation of the drive gas, wherein the partitions (3) can be destroyed by the drive gases.

6. A drive device according to one of claims 1 to 5 characterised in that
- two propellants (1, 2) with different rates of explosion are disposed in the casing (8);
- the two propellants (1, 2) are separated from each other transversely to the direction of propagation of the drive gas by a partition (3),
- the first propellant (1) with a lower rate of explosion is disposed between the firing device (4) and the second propellant (2) with the higher rate of explosion, and
- the second propellant (2) is disposed between the partition (3) and the opening (6) which in the non-fired condition is closed by a cover means (5) and through which the drive gas issues.

7. A drive device according to one of claims 1 to 6 characterised in that the first propellant (1) is black powder and the second propellant (2) is nitrocellulose (for example cellulose nitrate with N 12.3 - 13.7%).

8. A drive device according to one of claims 1 to 7 characterised in that the opening (6) through which the drive gas issues from the gas generator (7) approximately corresponds to or is slightly smaller than the container cross-section of the cartridge casing (8), which cross-section extends transversely to the direction of propagation of the propellent gas.

9. A drive device according to one of claims 1 to 8 characterised in that connected to the casing is an expandable space into which the drive gas flows.

10. A drive device according to claim 9 characterised in that the expandable space is disposed in a tube and is defined by a piston which is drivable or movable in the tube by the drive gas.

11. A drive device according to claim 9 characterized in that the expandable space is formed by an envelope which can be expanded by the drive gas.

12. A drive device according to one of claims 1 to 11 characterised in that within a respective stage a pressure gradient of from 40 to 70 bars/ms is formed within a respective period of from 2.0 to 4.0 ms.

## Revendications

1. Dispositif moteur comportant un élément moteur à mouvoir et un générateur pyrotechnique de gaz qui comprend un corps, un dispositif d'allumage et une charge d'agents générateurs de gaz placée dans le corps et qui, allumée par le dispositif d'allumage, dégage un gaz moteur qui, en sortant du corps, sert d'agent moteur de l'élément moteur à mouvoir, ce gaz sortant du corps en au moins deux étapes et le gaz sortant pendant la première étape ayant sur l'élément moteur à mouvoir une action motrice réduite par rapport au gaz de la deuxième étape ou des étapes suivantes, caractérisé par le fait que le gaz de la première étape est formé principalement par un ou plusieurs explosifs du dispositif d'allumage (4).

2. Dispositif moteur selon la revendication 1, caractérisé par le fait que le gaz de la première étape sort du corps (8) à une vitesse réduite par rapport à la deuxième étape ou aux étapes suivantes.

3. Dispositif moteur selon l'une des revendications 1 et 2, caractérisé par le fait que les gaz des différentes étapes sont formés par des explosifs ayant des vitesses d'explosion différentes, le gaz de la première étape étant formé par un explosif ayant la vitesse d'explosion la plus faible.

4. Dispositif moteur selon l'une des revendications 1 à 3, caractérisé par le fait que dans le corps sont placés deux ou plus de deux agents générateurs de gaz à vitesses d'explosion différentes, dans la direction de sortie du gaz, l'agent générateur de gaz (1) placé dans le corps (8) le plus près du dispositif d'allumage (4) ayant la vitesse d'explosion la plus faible.

5. Dispositif moteur selon la revendication 4, caractérisé par le fait que les agents générateurs de gaz (1, 2) sont séparés par des cloisons (3) s'étendant perpendiculairement à la direction de propagation du gaz moteur, ces cloisons (3) pouvant être détruites par les gaz moteurs.

6. Dispositif moteur selon l'une des revendications 1 à 5, caractérisé par le fait
- que dans le corps (8) sont placés deux agents générateurs de gaz (1, 2) ayant des vitesses d'explosion différentes,
- que ces deux agents générateurs de gaz (1, 2) sont séparés perpendiculairement à la direction de propagation du gaz moteur par une cloison (3),
- que le premier agent générateur de gaz (1), qui a la vitesse d'explosion la plus faible, est placé entre le dispositif d'allumage (4) et le deuxième agent générateur de gaz (2), qui a la vitesse d'explosion la plus grande, et
- que le deuxième agent générateur de gaz (2) est placé entre la cloison (3) et l'ouverture (6), fermée à l'état non allumé par un couvercle (5), par laquelle sort le gaz moteur.

7. Dispositif moteur selon l'une des revendications 1 à 6, caractérisé par le fait que le premier agent générateur de gaz (1) est de la poudre noire et le deuxième agent générateur de gaz (2) est de la nitrocellulose (par exemple du nitrate de cellulose à 12,3 à 13,7 % d'azote).

8. Dispositif moteur selon l'une des revendications 1 à 7, caractérisé par le fait que l'ouverture (6) par laquelle le gaz moteur s'échappe du générateur de gaz (7) correspond à peu près ou est légèrement inférieure à la section du corps cartouche (8) perpendiculaire à la direction de propagation du gaz d'agent générateur de gaz.

9. Dispositif moteur selon l'une des revendications 1 à 8, caractérisé par le fait qu'au corps fait suite un espace expansible dans lequel entre le gaz moteur.

10. Dispositif moteur selon la revendication 9, caractérisé par le fait que l'espace expansible se trouve dans un tube et est limité par un piston qui peut être mû dans le tube par le gaz moteur.

11. Dispositif moteur selon la revendication 9, caractérisé par le fait que l'espace expansible est formé par une enveloppe pouvant être gonflée par le gaz moteur.

12. Dispositif moteur selon l'une des revendications 1 à 11, caractérisé par le fait que dans chaque étape, un gradient de pression de 40 à 70 bar/mm est établi en 2,0 à 4,0 ms.
